# FASCICULE DE BREVET EUROPEEN

(11) **EP 0 600 759 B1**
(45) Date de publication et mention de la délivrance du brevet: **22.01.1997**
(21) Numéro de dépôt: 93402736.8
(22) Date de dépôt: 08.11.1993
(51) Int. Cl.: H02K 44/06, H02K 41/025, H02K 44/26

(54) **Machine électromagnétique à induction linéaire à répartition de flux magnétique optimisée et utilisation**
Elektromagnetische Linearinduktionmaschine mit einer optimalisierten Magnetflussverteilung und Verwendung
Linear electromagnetic induction machine with an optimised magnetic-flux distribution and application

(30) Priorité: 30.11.1992 FR 9214405
(43) Date de publication de la demande: 08.06.1994
(73) Titulaire: FRAMATOME, 92400 Courbevoie (FR)
(72) Inventeur: Leboucher, Laurent, F-38700 la Tronche (FR); Villani, Dominique, F-69720 Saint Laurent de Mure (FR); Marty, Philippe, F-38410 Uriage (FR)
(74) Mandataire: Bouget, Lucien

(56) Documents cités:
- DE-A- 1 908 457
- FR-A- 764 834
- FR-A- 1 593 007
- FR-A- 2 082 393
- GB-A- 2 064 229
- SOVIET PATENTS ABSTRACTS Section Ch, Week 9218, 17 Juin 1992 Derwent Publications Ltd., London, GB; Class K, AN 92-14838518 & SU-A-1 144 588 (OGORODNIKOV)

## Description

L'invention concerne une machine électromagnétique à induction linéaire dont la distribution du flux dans la direction axiale de l'inducteur est optimisée.

On connaît des machines électromagnétiques telles que des pompes destinées à assurer la circulation d'un matériau liquide conducteur, des dispositifs de freinage de la circulation d'un liquide conducteur dans un conduit, des moteurs linéaires ou encore des générateurs magnéto-hydrodynamiques (MHD) qui comportent un conduit tubulaire rectiligne destiné à recevoir un matériau conducteur pouvant circuler dans le conduit et un inducteur disposé de manière coaxiale autour du conduit.

L'inducteur comporte généralement un circuit magnétique formé de peignes en tôle magnétique ménageant des encoches annulaires coaxiales au conduit dans chacune desquelles est disposé un bobinage annulaire coaxial au conduit.

Les encoches des peignes de l'inducteur des machines électromagnétiques de type connu dans lesquelles sont disposés les bobinages sont séparées par des parties en saillie radiale vers l'intérieur appelées dents.

Les bobinages qui sont répartis suivant la direction axiale de la machine électromagnétique sont reliés chacun à une phase d'une source de courant polyphasé, de manière que l'inducteur crée un champ glissant dans la direction axiale, le long du conduit tubulaire.

On crée ainsi des courants induits dans le matériau conducteur à l'intérieur du conduit, si bien que le matériau est mis en circulation dans le sens axial, par l'effet conjugué des courants induits et du champ magnétique glissant de l'inducteur. De manière à faciliter la fermeture des lignes de champ à l'intérieur du conduit tubulaire, en particulier dans le cas où la machine électromagnétique est utilisée comme pompe, on a proposé de placer un noyau magnétique dans une disposition concentrique à l'intérieur du conduit.

Une telle pompe peut être utilisée en particulier pour assurer la circulation d'un métal liquide tel que du sodium utilisé comme fluide caloporteur dans les réacteurs nucléaires à neutrons rapides.

Dans de telles pompes et plus généralement, dans le cas de machines électromagnétiques quel que soit leur usage, on cherche à augmenter le rendement de la machine, c'est-à-dire par exemple dans le cas d'une pompe, le rapport de la puissance hydraulique à la puissance électrique consommée par la pompe.

Dans le cas des pompes électromagnétiques à induction linéaire connues et utilisées, ce rendement est toujours sensiblement inférieur à 50 %.

On connaît également des machines électromagnétiques, telles que des pompes comportant un conduit de forme plate, par exemple à section rectangulaire et un inducteur plat comportant des encoches rectilignes et parallèles entre elles, séparées par des dents rectilignes. L'inducteur est placé parallèlement et en vis-à-vis d'une des grandes faces planes du conduit, de manière que des dents soient dirigées vers le conduit.

Dans les machines électromagnétiques à induction linéaire de type connu, les dents de l'inducteur sont toutes de même longueur et sont distribuées de manière régulière dans la direction axiale.

La distance entre les bobinages successifs de l'inducteur est donc constante.

En outre, les bobinages successifs de l'inducteur sont généralement identiques et produisent tous le même nombre d'ampères/tour.

Comme indiqué plus haut, le rendement d'une telle machine électromagnétique utilisée comme pompe est sensiblement inférieur à 50 % et généralement voisin de 40 %.

Afin d'accroître le rendement des pompes électromagnétiques à induction linéaire telles que les pompes utilisées pour assurer la circulation du sodium liquide dans les réacteurs nucléaires à neutrons rapides, on a proposé diverses solutions qui permettent de faire varier soit la vitesse de circulation du fluide dans la direction axiale soit encore la répartition du flux magnétique.

On a par exemple proposé d'utiliser un conduit présentant des parties coniques de manière à faire varier la section de passage et donc la vitesse du fluide dans la direction axiale de l'inducteur correspondant à la direction de circulation du fluide.

La réalisation de telles parties coniques sur le conduit de circulation du fluide présente des difficultés au niveau de la conception et de la fabrication du conduit.

Dans le FR-A-2.082.393, on décrit une machine électromagnétique à induction linéaire dont l'inducteur comporte une zone centrale dans laquelle est disposé un enroulement polyphasé et deux zones d'extrémité comportant chacune un enroulement monophasé ; la longueur de chacune des zones est déterminée en fonction des conditions de fonctionnment de la machine.

On a également proposé de réaliser une pompe électromagnétique à induction linéaire dont l'inducteur présente un pôle supplémentaire à l'une de ses extrémités constitué par une dent supplémentaire de longueur accrue ou par allongement de la dernière dent d'un inducteur de type standard.

Bien qu'une telle pompe permette d'atteindre un rendement proche de 50 %, cette solution ne peut être adoptée de manière générale, dans la mesure où elle présente l'inconvénient d'augmenter l'encombrement et la masse de la pompe. Dans le cas des pompes destinées à transporter le sodium liquide de réacteurs nucléaires à neutrons rapides avec un très grand débit horaire, par exemple de l'ordre de 600 m³/heure ou même de 11000 m³/heure, l'encombrement axial de la pompe atteint une valeur de plusieurs mètres et il n'est généralement pas souhaitable d'augmenter encore cet encombrement.

On a également proposé de placer dans chacune des encoches des peignes de l'inducteur deux bobinages de pas polaires différents, de manière superposée. Cette solution conduit à un coût d'investissement élevé qui est dû à la complexité de l'alimentation électrique ou de la réalisation du bobinage lui-même.

Dans le GB-A-2.064.229, on a proposé, dans le but de diminuer la puissance réactive d'une machine électromagnétique, d'utiliser un stator comportant deux parties successives, la première ayant des pas polaires régulièrement espacés, la deuxième ayant des pas polaires régulièrement espacés, mais de pas plus courts que la précédente. Une telle disposition ne permet pas d'améliorer sensiblement le rendement de la machine électromagnétique.

On ne connaissait donc pas de machine électromagnétique à induction linéaire présentant à la fois un rendement élevé et un encombrement et un coût modérés. On ne connaissait pas en particulier de telles machines électromagnétiques pouvant fonctionner comme pompe avec une grande puissance et un débit élevé.

Le but de l'invention est donc de proposer une machine électromagnétique à induction linéaire comportant un conduit tubulaire sensiblement rectiligne destiné à recevoir un matériau conducteur pouvant circuler dans le conduit et un inducteur comprenant un circuit magnétique formé de peignes en tôle magnétique ménageant des encoches parallèles entre elles et disposées sensiblement parallèlement au contour externe du conduit sur une partie au moins de sa périphérie, séparées les unes des autres suivant la longueur axiale du conduit par des parties de l'inducteur en saillie vers l'intérieur en direction du conduit ou direction radiale, appelées dents, un bobinage étant disposé dans chacune des encoches et relié à une phase d'une source de courant polyphasée, cette machine électromagnétique présentant un rendement élevé, un faible encombrement et pouvant être réalisé pour un coût modéré.

Dans ce but, les dents de l'inducteur disposées dans l'une au moins des parties d'extrémité de l'inducteur situées en vis-à-vis de parties d'entrée et de sortie du conduit, dans le sens de circulation du matériau conducteur, ont une longueur dans la direction axiale généralement supérieure à la longueur axiale des dents dans une partie centrale de l'inducteur située entre les parties d'extrémité et au moins deux bobinages voisins de l'inducteur sont reliés à deux phases de la source de courant polyphasée qui ne sont pas des phases successives du courant d'alimentation.

De préférence, les encoches des peignes de l'inducteur ont des profondeurs généralement plus fortes dans la partie centrale de l'inducteur que dans les parties d'extrémité et renferment des bobinages ayant un plus grand nombre de spires.

Afin de bien faire comprendre l'invention, on va maintenant décrire, à titre d'exemple non limitatif, en se référant aux figures jointes en annexe, une pompe électromagnétique à induction linéaire suivant l'invention.

La figure 1 est une vue en perspective éclatée d'une pompe suivant l'invention.

La figure 2 est une vue en coupe par un plan axial de la pompe représentée sur la figure 1.

La figure 3 est une vue schématique de la pompe dans le sens longitudinal montrant un mode de branchement des bobinages successifs de l'inducteur.

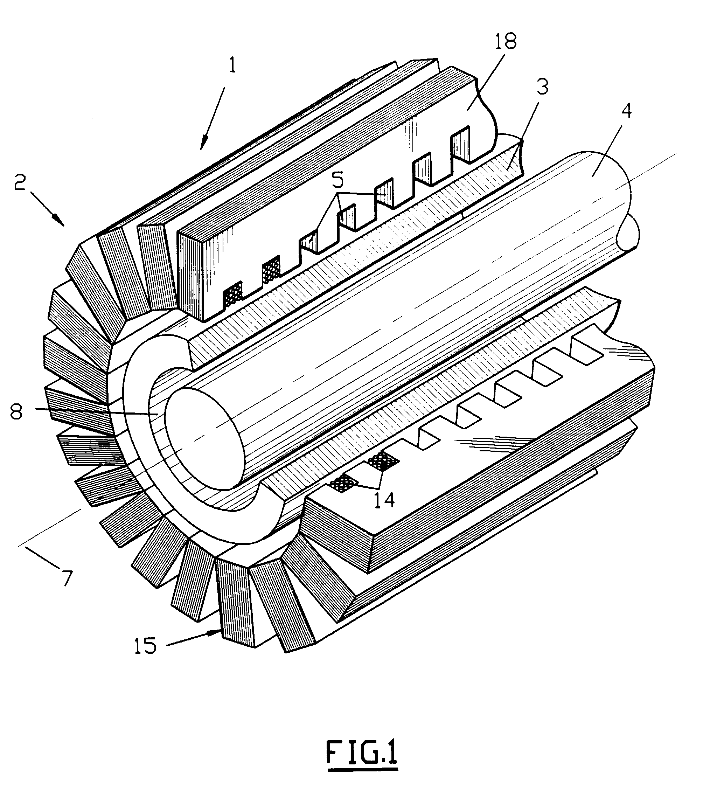

Sur la figure 1, on voit une pompe électromagnétique à induction linéaire suivant l'invention désignée de manière générale par le repère 1.

La pompe 1 comporte un inducteur 2 qui est constitué d'un circuit magnétique 15 formé de peignes 18 et des bobinages 14 et un conduit tubulaire 3 dans une disposition coaxiale, à l'intérieur des peignes 18 de l'inducteur 2.

En outre, un noyau magnétique 4 de forme cylindrique est placé dans une disposition coaxiale à l'intérieur du conduit tubulaire 3, en vis-à-vis de l'inducteur 2.

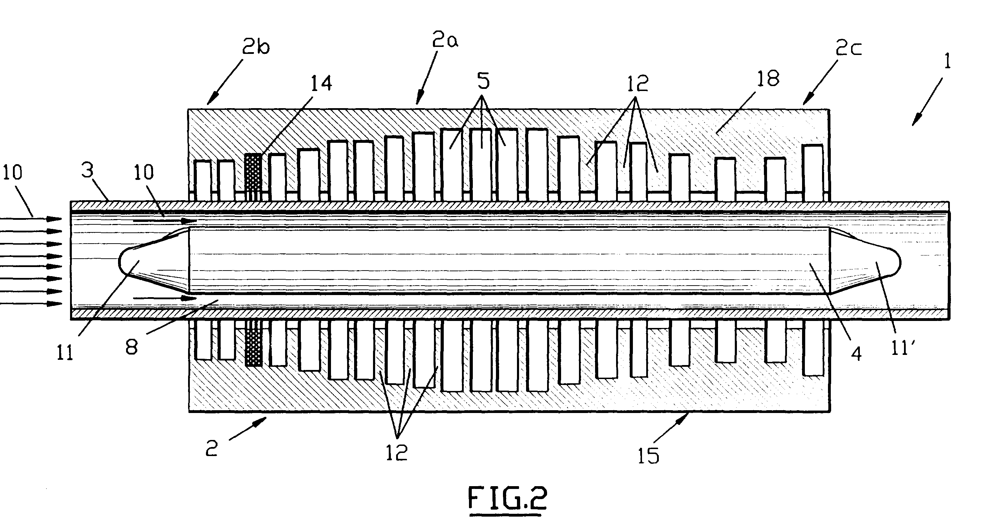

En se reportant aux figures 1 et 2, on voit que le circuit magnétique feuilleté 15 de l'inducteur 2 est formé de peignes 18 constitués par des tôles magnétiques juxtaposées de direction radiale.

Chacune des tôles du circuit magnétique 15 de l'inducteur 2 est découpée pour constituer des encoches successives dont la section est sensiblement rectangulaire.

Les découpages des tôles magnétiques juxtaposées constituant les peignes 18 du circuit magnétique 15 permettent de ménager à l'intérieur des peignes 18 de l'inducteur, des encoches 5 de forme annulaire disposées successivement dans la direction longitudinale de l'inducteur parallèle à l'axe 7 de la pompe qui est l'axe commun au conduit tubulaire 3 et à l'inducteur 2.

Le noyau magnétique 4 disposé à l'intérieur du conduit 3 est réalisé également sous forme feuilletée, en assemblant, de manière juxtaposée, des plaques de direction radiale découpées dans des tôles magnétiques.

Le conduit tubulaire 3 est fixé dans une disposition coaxiale à l'intérieur de l'inducteur 2, avec un faible jeu dans la direction radiale.

Un espace annulaire 8 est ménagé entre la surface intérieure du conduit 3 et la surface extérieure du noyau 4 fixé dans une disposition coaxiale à l'intérieur du conduit 3.

Le matériau conducteur mis en circulation par la pompe, comme schématisé par les flèches 10 sur la figure 2, circule dans une direction axiale, à l'intérieur de l'espace annulaire 8, dans la partie du conduit 3 située en vis-à-vis de l'inducteur 2.

Il est bien évident que le conduit 3 peut être relié à un conduit de diamètre identique assurant l'amenée du liquide conducteur et à un conduit de sortie assurant l'évacuation du liquide conducteur.

De préférence, le noyau 4 comporte une enveloppe extérieure tubulaire lisse à l'intérieur de laquelle sont fixées les tôles magnétiques de la structure feuilletée du noyau et deux parties d'extrémité sensiblement ogivales 11 et 11' permettant de limiter l'effet de freinage du fluide par le noyau magnétique 4.

Entre deux encoches successives quelconques, les peignes 18 du circuit magnétique 15 de l'inducteur 2 comportent une partie 12 annulaire en saillie radiale vers l'intérieur de l'inducteur, c'est-à-dire en direction de son axe 7, par rapport au fond des encoches 5.

Les parties en saillie 12 successives séparant les encoches 5 seront désignées comme dents de l'inducteur.

Dans chacune des encoches annulaires 5 est disposé un bobinage annulaire 14 comportant une pluralité de spires qui ont toutes pour axe l'axe 7 de la pompe.

Chacun des bobinages 14 est relié à une phase d'une source de courant alternatif polyphasée. De cette manière, des courants circulent dans les spires des bobinages 14 dans une direction circonférentielle de l'inducteur, autour du conduit 3.

Les bobinages successifs 14 engendrent des champs magnétiques qui se répartissent suivant la direction axiale de la pompe et qui sont décalés les uns par rapport aux autres, du fait que les bobinages sont reliés à des phases différentes de la source de courant.

Les lignes de force des champs créés se referment par l'intermédiaire du noyau magnétique 4, à l'intérieur du conduit 3.

On crée ainsi un champ glissant dans la direction axiale 7 de la pompe et de l'inducteur.

Lorsqu'un matériau conducteur tel que du sodium pénètre dans l'espace annulaire 8 de la pompe, des courants induits sont créés à l'intérieur du liquide conducteur par les champs de l'inducteur.

L'effet conjugué des courants induits et du champ glissant produit des forces de direction axiale et entraîne le matériau conducteur dans la direction axiale, comme indiqué par les flèches 10.

Le dispositif suivant l'invention tel qu'il sera expliqué en se référant aux figures 1, 2 et 3 permet de réaliser une distribution optimisée des courants créant le champ magnétique, dans la direction axiale de l'inducteur.

Une augmentation sensible de rendement de la pompe peut être obtenue par le fait que la distribution des courants est optimisée, aussi bien en ce qui concerne la distribution de phase que la distribution d'intensité.

Comme il est visible en particulier sur la figure 2, les dents successives 12 de l'inducteur 2 séparant les encoches 5 dans lesquelles sont disposés les bobinages 14 ne sont pas toutes de même largeur dans la direction axiale.

C'est ainsi que de manière générale, les dents séparant les encoches situées à la partie centrale 2a de l'inducteur 2 ont une longueur plus faible que les dents situées vers les extrémités 2b et 2c de l'inducteur situées en vis-à-vis des parties d'entrée et de sortie du conduit 3. Par exemple, les dents situées dans la partie d'extrémité 2c disposée du côté de la sortie de l'inducteur, dans le sens de circulation du liquide donné par les flèches 10, ont une longueur importante par rapport aux dents situées dans la partie centrale 2a.

La longueur des dents dans la direction axiale est donc d'abord décroissante, depuis l'extrémité d'entrée de l'inducteur jusqu'à la partie centrale puis croissante de la partie centrale jusqu'à l'extrémité de sortie de l'inducteur.

Il en résulte que les distances entre les parties médianes des encoches 5 et des bobinages 14 situés dans ces encoches correspondant aux pas polaires successifs de l'inducteur sont sensiblement plus faibles dans la partie centrale 2a de l'inducteur que dans les parties d'extrémité 2b et 2c.

Les différents courants d'alimentation de l'inducteur qui présentent entre eux des décalages de phase ne sont pas appliqués sur des bobinages régulièrement répartis suivant la longueur axiale de l'inducteur.

Il en résulte que la distribution de phase suivant la longueur de l'inducteur n'est pas linéaire mais suit une loi de variation qui peut être modulée en choisissant les longueurs successives des dents 12 de l'inducteur.

On a pu montrer que certaines distributions de phases des courants et donc du flux magnétique suivant la longueur axiale de l'inducteur étaient favorables pour l'obtention d'un rendement optimal de la pompe électromagnétique.

Les bobinages 14 disposés dans les encoches 5 peuvent être reliés aux phases successives d'une alimentation polyphasée, la distribution de phase suivant la direction axiale de l'inducteur est alors déterminée par les longueurs des dents successives de l'inducteur, c'est-à-dire par l'entraxe entre les encoches ou entre les bobinages.

De plus, comme il est visible sur les figures 1 et 2, la profondeur des encoches 5 n'est pas constante suivant la longueur de l'inducteur 2.

De manière générale, les encoches ont une profondeur plus importante dans la partie centrale 2a de l'inducteur que dans les parties d'extrémité 2b et 2c.

Les encoches 5 de profondeur variable permettent de recevoir des bobines 14 présentant des nombres de spires différents et donc susceptibles de créer une densité de courant qui est variable suivant la direction longitudinale de l'inducteur 2.

On peut ainsi moduler la distribution du courant suivant la direction longitudinale de l'inducteur 2 et régler cette distribution des courants d'alimentation de l'inducteur de manière à optimiser le rendement ainsi que la force et la puissance de la pompe électromagnétique, par exemple pour une longueur totale donnée de l'inducteur.

La machine électromagnétique suivant l'invention présente donc des caractéristiques permettant d'optimiser à la fois la distribution de phases et la distribution d'intensité des courants d'alimentation de l'inducteur, suivant la direction longitudinale axiale de cet inducteur.

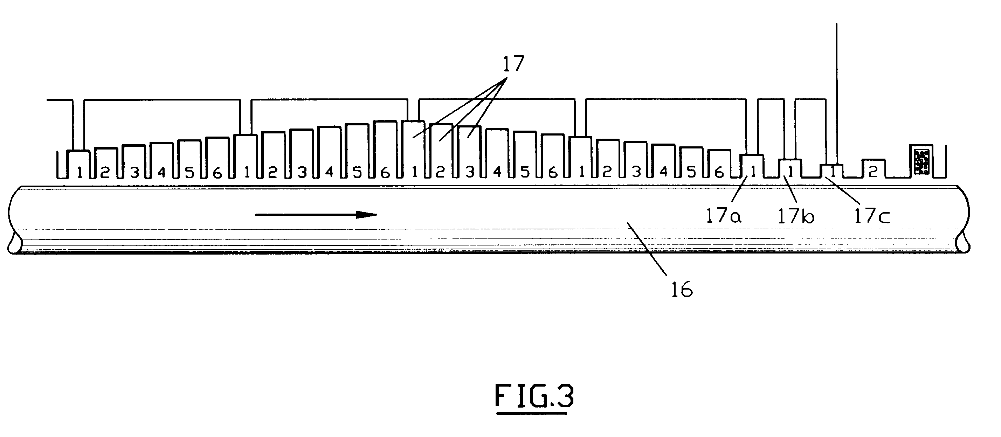

En outre, comme représenté sur la figure 3, il est possible d'optimiser la distribution de phases, non seulement en faisant varier l'écartement des bobinages successifs suivant les zones de l'inducteur dans la direction axiale mais encore en réalisant un branchement des bobinages successifs, de manière qu'une partie au moins de ces bobinages successifs ne soit pas reliée aux phases successives de l'alimentation polyphasée.

De préférence, plusieurs bobinages successifs peuvent être reliés à une même phase.

Sur la figure 3, on a représenté de manière schématique, le conduit tubulaire 16 et les bobinages 17 de l'inducteur d'une pompe électromagnétique alimentée en courant hexaphasé.

Comme dans le cas de la pompe représentée sur les figures 1 et 2, les encoches recevant les bobinages successifs 17 ne sont pas régulièrement espacées sur toute la longueur de l'inducteur, les bobinages situés dans la partie de sortie de la pompe étant généralement plus espacés que les bobinages situés dans les autres parties de l'inducteur. Cette disposition est obtenue par les découpages des peignes 18 du circuit magnétique de l'inducteur dont les dents ont une longueur plus importante vers l'extrémité correspondant à la sortie de la pompe.

En outre, comme décrit précédemment, en ce qui concerne la pompe des figures 1 et 2, la profondeur des encoches n'est pas constante suivant la longueur de l'inducteur, les encoches recevant les bobinages 17 ayant une profondeur dans la direction radiale plus importante dans la partie centrale de l'inducteur.

Les bobinages 17 de la partie centrale de l'inducteur présentent donc un plus grand nombre de spires et fournissent un plus grand nombre d'ampères/tour que les bobinages situés vers les extrémités de la pompe.

Comme il est visible sur la figure 3, le nombre de spires des bobinages successifs augmente de manière régulière jusqu'à une zone située vers la partie centrale de l'inducteur puis diminue progressivement pour se fixer à une valeur relativement faible et sensiblement constante dans la partie de l'inducteur correspondant à l'extrémité de sortie de la pompe.

Sur la figure 3, on a de plus indiqué par un chiffre porté sur chacun des bobinages 17 successifs, la phase de l'alimentation hexaphasée à laquelle est relié le bobinage.

Les quatre premières séries de six bobinages sont reliées aux phases successives 1, 2, 3, 4, 5, 6 de l'alimentation hexaphasée, dans l'ordre de ces phases.

A la suite de ces bobinages reliés de manière séquentielle aux phases de l'alimentation hexaphasée, trois bobinages 17a, 17b et 17c dont l'écartement est sensiblement plus important que l'écartement des autres bobinages 17 sont reliés à la phase 1 de l'alimentation polyphasée.

Le dernier bobinage de l'inducteur du côté de l'extrémité de sortie de la pompe est relié à la phase 2 de l'alimentation polyphasée.

On a représenté par des traits de liaison, la distribution de la phase 1 du courant hexaphasé.

La phase 1 est d'abord reliée, en partant de l'extrémité d'entrée de la pompe, à des bobinages situés de six en six puis à trois bobinages successifs.

Du fait des espacements variables des bobinages 17 et de la séquence irrégulière de branchement de la phase à l'extrémité de sortie de la pompe, on a pu régler la distribution de la phase 1 de l'alimentation hexaphasée sur les bobinages de l'inducteur, de manière à optimiser le rendement et les performances générales de la pompe électromagnétique.

Une pompe électromagnétique suivant l'invention dont le branchement des bobinages successifs 17 est réalisé de la manière représentée sur la figure 3, présente un rendement légèrement supérieur à 48 % et des performances générales tout-à-fait satisfaisantes, sans augmenter la longueur de l'inducteur, comparativement aux pompes connues de l'art antérieur dont le rendement est inférieur à 42 %.

Dans le cas d'une pompe suivant l'art antérieur dont le rendement peut être porté à une valeur proche de 48 %, par adjonction d'un pôle d'extrémité de grande longueur vers la sortie de la pompe, on doit accepter une augmentation de longueur de l'inducteur de l'ordre de 20 %.

Dans le cas de l'invention, l'obtention de performances supérieures est obtenue avec un inducteur dont la longueur est donc inférieure de 20 % à la longueur de l'inducteur d'une pompe de l'art antérieur ayant un pôle d'extrémité supplémentaire.

En utilisant les dispositions suivant l'invention, par exemple telles que représentées sur les figures 1 et 2 ou sur la figure 3, on a pu concevoir une pompe ayant un débit de 600 m³/heure dont la longueur (c'est-à-dire la longueur de l'inducteur) est de 2,2 m, ce qui se compare favorablement à la longueur d'une pompe suivant l'art antérieur (2,7 m).

Le diamètre du conduit de la pompe dans lequel circule le liquide conducteur dont on effectue le pompage est de 300 mm environ.

On a pu également concevoir une pompe suivant l'invention ayant un très grand débit, de l'ordre de 11000 m³/h. Une telle pompe présente une longueur de 5 m et le diamètre du conduit tubulaire central est de 1 m environ.

La machine électromagnétique suivant l'invention présente donc l'avantage de permettre d'obtenir un excellent rendement tout en maintenant les caractéristiques générales de la pompe à un niveau satisfaisant et sans augmenter la longueur de l'inducteur de la machine électromagnétique.

En outre, cette machine électromagnétique qui peut être par exemple une pompe à très grand débit est réalisée sans avoir recours à une alimentation électrique complexe destinée à fournir les courants d'alimentation à des ensembles de bobinages multiples.

Le prix de revient de la pompe reste donc modéré.

Selon l'invention, on peut ainsi envisager d'utiliser des pompes à très grands débits, pour assurer la circulation d'un métal liquide caloporteur tel que le sodium d'un réacteur nucléaire à neutrons rapides. Dans ce cas, on peut assurer la circulation du sodium secondaire en utilisant des pompes selon l'invention. La puissance totale des six pompes est alors de 17 MW, comparé à la puissance de 18 MW qui serait nécessaire en utilisant les six pompes selon l'art antérieur. D'où un gain de puissance de 1 MW.

L'invention ne se limite pas au mode de réalisation qui a été décrit.

C'est ainsi qu'on peut envisager des machines électromagnétiques suivant l'invention présentant des dents de longueur variable qui sont réparties d'une manière différente de celle qui a été décrite et des encoches de profondeur variable dans la direction radiale destinées à recevoir des bobinages ayant un nombre de spires variable, réparties d'une manière différente.

On peut également envisager des modes de branchement des phases différents du mode de branchement qui a été envisagé où plusieurs bobinages successifs sont reliés à une même phase. On peut par exemple inverser localement l'ordre des phases sur plusieurs bobinages successifs.

D'une manière générale, la machine électromagnétique suivant l'invention peut être une pompe destinée à assurer la circulation d'un matériau conducteur électrique quelconque tel que le sodium des boucles secondaires d'un réacteur à neutrons rapides ou toute autre pompe destinée à assurer la circulation d'un matériau conducteur quelconque et en particulier d'un métal tel que le zinc, le magnésium, le plomb, le mercure ou le lithium.

La machine électromagnétique suivant l'invention peut également être utilisée comme moyen de propulsion dans un liquide conducteur tel que l'eau de mer ; dans ce cas, l'eau de mer est aspirée par une extrémité d'entrée du conduit de la machine électromagnétique fonctionnant comme une pompe et éjectée par l'extrémité de sortie du conduit.

La machine électromagnétique suivant l'invention peut être réalisée également sous la forme d'un dispositif de freinage d'un écoulement d'un matériau conducteur ou encore sous la forme d'un moteur linéaire ou d'un générateur magnéto-hydrodynamique. Dans le cas de l'utilisation comme moteur linéaire, l'invention peut s'appliquer en particulier à la propulsion de véhicules terrestres.

L'invention peut également être transposée aux pompes à induction ou autres machines électromagnétiques comportant un conduit de forme tubulaire plate comprenant au moins deux grandes faces planes opposées et un inducteur comportant des peignes en tôles magnétiques ménageant des encoches rectilignes et parallèles entre elles séparéés par des dents dirigées vers l'une au moins des grandes faces planes du conduit ; ces pompes sont en fait des pompes annulaires dont l'inducteur a été déroulé.

## Revendications

1. Machine électromagnétique à induction linéaire comportant un conduit tubulaire (3, 16) sensiblement rectiligne destiné à recevoir un matériau conducteur pouvant circuler dans le conduit et un inducteur (2) comprenant un circuit magnétique formé de peignes (18) en tôle magnétique ménageant des encoches (5) parallèles entre elles et disposées sensiblement parallèlement au contour externe du conduit sur une partie au moins de sa périphérie, séparées les unes des autres suivant la longueur axiale du conduit par des parties de l'inducteur en saillie vers l'intérieur en direction du conduit ou direction radiale, appelées dents, au moins un bobinage étant disposé dans chacune des encoches (5) et relié à une phase d'une source de courant polyphasé, caractérisée par le fait que les dents de l'inducteur disposées dans l'une au moins des parties d'extrémité de l'inducteur situées en vis-à-vis de parties d'entrée et de sortie (2b, 2c) du conduit (3, 16), dans le sens de circulation du matériau conducteur, ont une longueur dans la direction axiale supérieure à la longueur axiale des dents dans une partie centrale (2a) de l'inducteur située entre les parties d'extrémité et au moins deux bobinages voisins (14) de l'inducteur (2) sont reliés à deux phases de la source de courant polyphasée qui ne sont pas des phases successives du courant d'alimentation.

2. Machine électromagnétique suivant la revendication 1, caractérisée par le fait que les encoches (5) des peignes de l'inducteur ont des profondeurs plus fortes dans la partie centrale (2a) de l'inducteur que dans les parties d'extrémité (2b, 2c) et renferment des bobinages (14) ayant un plus grand nombre de spires

3. Machine électromagnétique suivant l'une quelconque des revendications 1 et 2, caractérisée par le fait qu'au moins deux bobinages voisins (14) de l'inducteur (2) sont reliés à une même phase de la source de courant électrique d'alimentation.

4. Machine électromagnétique suivant la revendication 3, caractérisée par le fait qu'au moins deux bobinages successifs (17a, 17b, 17c) situés à l'une au moins des extrémités de l'inducteur correspondant à l'entrée et à la sortie du conduit (3, 16) sont reliés à une même phase de la source de courant polyphasé.

5. Machine électromagnétique suivant l'une quelconque des revendications 1 à 4, comportant un conduit (3, 16) de forme tubulaire et un inducteur (2) de forme annulaire disposé de manière coaxiale autour du conduit (3, 16) comprenant des peignes (18) de direction radiale ménageant des encoches (5) de forme annulaire séparées par des dents (12) de forme annulaire dirigées vers l'intérieur et renfermant chacune un bobinage annulaire (14) coaxial au conduit (3, 16) et à l'inducteur (2), caractérisée par le fait qu'elle comporte un noyau magnétique (4) de forme sensiblement cylindrique placé dans une disposition coaxiale à l'intérieur du conduit tubulaire (3, 16), en vis-à-vis de l'inducteur (2).

6. Machine électromagnétique suivant l'une quelconque des revendications 1 à 4, caractérisée par le fait qu'elle comporte un conduit (3, 16) de forme tubulaire plate comportant au moins deux grandes faces planes opposées et un inducteur (2) comportant des peignes (18) en tôles magnétiques ménageant des encoches (5) rectilignes et parallèles entre elles séparées par des dents (12) dirigées vers l'une au moins des grandes faces planes du conduit (3, 16).

7. Utilisation d'une machine électromagnétique suivant l'une quelconque des revendications 1 à 6, comme pompe de circulation d'un métal liquide de refroidissement d'un réacteur nucléaire à neutrons rapides, tel que le sodium.

## Patentansprüche

1. Linearinduktionselektromotor mit einer Rohrleitung (3, 16), die im wesentlichen geradlinig ist und dazu dient, ein leitendes Material aufzunehmen, das in dem Rohr zirkulieren kann, und einem Feldmagneten (2) mit einem Magnetkreis in Form von Kämmen (18) aus Magnetblech, so daß parallele Einkerbungen (5) zwischen diesen stehenbleiben und im wesentlichen parallel zu dem Außenumriß des Rohres auf einem Teil wenigstens der Peripherie angeordnet sind, wobei die einen von den anderen entlang der axialen Ausdehnung des Rohres durch Teile des Feldmagneten, die nach innen in Richtung des Rohres oder in radialer Richtung vorspringen, getrennt sind, die Zähne genannt werden, wobei wenigstens eine Spule in jeder der Einkerbungen (5) angeordnet ist und mit einer Phase einer Mehrphasenstromquelle verbunden ist,
dadurch gekennzeichnet, daß
die Zähne des Feldmagneten wenigstens eines der Teile des Feldmagneten am Rande gegenüber den Eingangs- und Ausgangsteilen (2b, 2c) des Rohres (3, 16) in Richtung der Zirkulation des leitenden Materials eine Ausdehnung in Axialrichtung haben, die größer als die axiale Ausdehnung der Zähne in einem zentralen Teil (2a) des Feldmagneten zwischen den Außenteilen ist und wenigstens zwei benachbarte Spulen (14) des Feldmagneten (2) mit zwei Phasen der Mehrphasenstromquelle verbunden sind, die nicht aufeinanderfolgende Phasen der Stromversorgung sind.

2. Elektromotor nach Anspruch 1, dadurch gekennzeichnet, daß die Einkerbungen (5) der Kämme des Feldmagneten eine größere Tiefe im zentralen Teil (2a) des Feldmagnenten als in den Teilen am Ende (2b, 2c) haben und Spulen (14) mit einer größeren Zahl an Windungen einschließen.

3. Elektromotor nach einem der Ansprüche 1 und 2, dadurch gekennzeichnet, daß wenigstens zwei benachbarte Spulen (14) des Feldmagneten (2) mit einer gleichen Phase der elektrischen Stromversorgungsquelle verbunden sind.

4. Elektromotor nach Anspruch 3, dadurch gekennzeichnet, daß wenigstens zwei aufeinanderfolgende Spulen (17a, 17b, 17c) an wenigstens einem Ende des Feldmagneten entsprechend dem Eingang und dem Ausgang des Rohres (3, 16) mit einer gleichen Phase der Mehrphasenstromquelle verbunden sind.

5. Elektromotor nach einem der Ansprüche 1 bis 4, der ein Rohr (3, 16) in Form einer Röhre und einen ringförmigen Feldmagneten (2) koaxial um das Rohr (3, 16) mit Kämmen (18) in radialer Richtung, so daß ringförmige Einkerbungen (5) stehenbleiben, die durch ringförmige zähne (12), die nach innen gerichtet sind, getrennt werden und jeweils eine ringförmige Spule (14) koaxial um das Rohr (3, 16) und den Feldmagneten (2) einschließen, umfaßt, dadurch gekennzeichnet, daß er einen magnetischen Kern (4) von im wesentlichen zylindrischer Form koaxial im Inneren der Rohrleitung (3, 16) gegenüber dem Feldmagneten (2) umfaßt.

6. Elektromotor nach einem der Ansprüche 1 bis 4, dadurch gekennzeichnet, daß er eine flache Rohrleitung (3, 16) mit wenigstens zwei großen, ebenen gegenüberliegenden Flächen und einen Feldmagneten (2) mit Kämmen (18) aus Magnetblechen umfaßt, so daß geradlinige und parallele Einkerbungen (5) stehenbleiben, die durch Zähne (12), die auf wenigstens eine der großen ebenen Flächen der Rohrleitung (3, 16) gerichtet sind, getrennt werden.

7. Verwendung eines Elektromotors nach einem der Ansprüche 1 bis 6 als Umwälzpumpe eines Flüssigmetalls zum Kühlen eines Nuklearreaktors mit schnellen Neutronen, wie z.B. Natrium.

## Claims

1. Electromagnetic linear induction machine comprising a substantially rectilinear tubular duct (3, 16) adapted to receive a conductive material capable of flowing in the duct and an inductor (2) comprising a magnetic circuit made up of combs (18) of magnetic sheet metal which define notches (5) which are parallel to one another and arranged substantially parallel to the outer contour of the duct over at least part of its periphery, separated from one another along the axial length of the duct by parts of the inductor projecting inwardly towards the duct or in the radial direction, these parts being known as teeth, at least one coil being arranged in each of the notches (5) and connected to one phase of a polyphase current source, characterised in that the teeth of the inductor arranged in at least one end part of the inductor located opposite the inlet and outlet parts (2b, 2c) of the duct (3, 16), in the direction of circulation of the condutive material, have a length in the axial direction which is greater than the axial length between the teeth in a central part (2a) of the inductor located between the end parts and at least two adjacent coils (14) of the inductor (2) are connected to two phases of the polyphase current source which are not successive phases of the supply current.

2. Electromagnetic machine according to claim 1, characterised in that the notches (5) of the combs of the inductor are deeper in the central part (2a) of the inductor than in the end parts (2b, 2c) and contain coils (14) having a greater number of windings.

3. Electromagnetic machine according to either of claims 1 and 2, characterised in that at least two adjacent coils (14) of the inductor (2) are connected to the same phase of the electric current supply source.

4. Electromagnetic machine according to claim 3, characterised in that at least two successive coils (17a, 17b, 17c) located at at least one end of the inductor corresponding to the inlet and outlet of the duct (3, 16) are connected to the same phase of the polyphase current source.

5. Electromagnetic machine according to any one of claims 1 to 4, comprising a tubular duct (3, 16) and an annular inductor (2) arranged coaxially around the duct (3, 16) comprising radially directed combs (18) defining annular notches (5) separated by inwardly directed annular teeth and each containing an annular coil (14) coaxial with the duct (3, 16) and the inductor (2), characterised in that it comprises a substantially cyindrical magnetic core (4) placed in a device coaxial with the interior of the tubular duct (3, 16), facing the inductor (2).

6. Electromagnetic machine according to any one of claims 1 to 4, characterised in that it comprises a flat tubular duct (3, 16) comprising at least two opposing large flat surfaces and an inductor (2) comprising combs (18) of magnetic sheet metal defining rectilinear notches (5) which are parallel to one another and separated by teeth (12) directed towards at least one of the large flat surfaces of the duct (3, 16).

7. Use of an electromagnetic machine according to any one of claims 1 to 6 as a pump for circulating a metal cooling liquid such as sodium in a fast neutron nuclear reactor.
